# EUROPEAN PATENT APPLICATION

(11) **EP 0 905 041 A2**
(43) Date of publication of application: **31.03.1999**
(21) Application number: 98250337.7
(22) Date of filing: 22.09.1998
(51) Int. Cl.: B65D 75/26, B65D 75/38

(54) **Package comprising an inner, gas-permeable enclosure and an outer, gas-impermeable enclosure peelably adhered to the inner enclosure**

(30) Priority: 30.09.1997 US 940673
(71) Applicant: Cryovac, Inc., Duncan, S.C. 29334-0464 (US)
(72) Inventor: Wood,John C., Milton,Ontario L9T3M8 (CA); VanPutte,Andrew W., Geer, SC 29651 (US); Accardi,Giuseppe, Brampton,Ontario L6X3R9 (CA); Wolf, John R., Greenville,SC 29601 (US); Morris,Jennifer E., Mississauga,Ontario L5G3L5 (CA)
(74) Representative: UEXKÜLL & STOLBERG

(57) **Abstract**

A package which is ideally suited for the shipment, storage, and display of fresh red meat products includes an inner, gas-permeable enclosure containing therein a product and being formed from a thermoplastic film that conforms to the contour of the product. The package also includes an outer, gas-impermeable enclosure which is peelably bonded to the gas-permeable enclosure so that the product can be maintained in a low-oxygen environment until such time that it is desired to remove the gas-impermeable enclosure. The gas-impermeable enclosure is bonded to the gas-permeable enclosure via reactive surface modification so that the gas-impermeable enclosure is peelably removable from the gas-permeable enclosure at a bond-strength ranging from about 0.2 to about 15 Newtons/meter. Related packaging and manufacturing methods, as well as preferred gas-permeable and gas-impermeable films, are also disclosed.

## Description

### BACKGROUND OF THE INVENTION

The present invention relates to packaging for products, such as food products, which are enclosed under certain environmental conditions in an outer, gas-impermeable enclosure which peelably delaminates (i.e., delaminates upon peeling) to expose an inner, gas-permeable enclosure, thereby causing a change in the environmental conditions within the package. More specifically, the invention relates to such packaging for fresh red meat products.

Historically, large sub-primal cuts of meat have been butchered and packaged in each supermarket. This arrangement has long been recognized to be inefficient and expensive. It would instead be preferable to butcher and package the meat at a central processing facility which benefits from economies of scale, and then ship the packaged meat to individual supermarkets or other retail outlets such as is done, for example, with many poultry products. It is believed that central processing of meat would also lead to a higher quality, more sanitary product with a longer shelf-life than meat which is butchered and packaged in individual supermarkets.

Fresh red meat presents a particular challenge to the concept of centralized processing and packaging due to its oxygen-sensitivity. Such oxygen-sensitivity is manifested in the shelf-life and appearance (color) of a packaged meat product. For example, while a low-oxygen packaging environment generally increases the shelf-life of a packaged meat product (relative to meat products packaged in an environment having a higher oxygen content), red meat has a tendency to assume a purple color when packaged in the absence of oxygen or in an environment having a very low oxygen concentration, i.e., below about 5% oxygen. Unfortunately, such a purple color is undesirable to most consumers, and marketing efforts to teach the consumer about the acceptability of the purple color have been largely ineffective. When meat is exposed to a sufficiently high concentration of oxygen, e.g., as found in air, it "re-blooms" to a bright red color which most consumers associate with freshness. After 1 to 3 days of such exposure, however, meat assumes a brown color which, like the purple color, is undesirable to most consumers (and indicates that the meat is beginning to spoil).

Thus, in order to effectively butcher and package meat products in a central facility for distribution to retail outlets, the meat would desirably be packaged, shipped, and stored in a low-oxygen environment for extended shelf-life, and then displayed for consumer sale in a relatively high-oxygen environment such that the meat is caused to re-bloom to a red color just before being placed in a retail display case. While in the retail display case, the meat product is desirably contained in a package which protects it from microbial and other contamination. In order to attain the maximum economic benefit from centralized packaging, the package in which the meat product is displayed for consumer sale is the same package in which the meat product is initially packaged and shipped from the central processing facility. As can be appreciated, centralized butchering and packaging of fresh red meat presents a number of difficult packaging challenges.

A variety of packages have been developed in an effort to overcome the foregoing challenges. One class of such packages is known as "vacuum skin packaging," in which a product to be packaged has traditionally been placed on a supporting member, such as a rigid or semi-rigid tray, and essentially serves as a mold for a thermoformable film which is formed about the product and adhered to the tray by means of heat and differential air pressure. Virtually all of the air is evacuated from the interior of the package so that the film conforms very closely to the contour of the packaged product (see, e.g., U.S. Pat. Nos. Re 30,009 (Purdue et al.) and 5,346,735 (Logan et al.), the disclosures of which are hereby incorporated herein by reference). When used to package fresh red meat products, it is necessary for both the film formed around the product and the support member to present a barrier to the passage of gases therethrough, particularly oxygen such as is found in air, which are detrimental to the shelf or storage life of fresh red meat. The thermoformed film generally includes both a gas-permeable film in contact with the product and a substantially gas-impermeable film which is peelably adhered to the gas-permeable film so that the gas-impermeable film may be peelably removed from the gas-permeable film, thereby allowing the meat product to re-bloom to the customer-preferred red color, e.g., at retail, while still being protected from dust, dirt, and other contaminates by the remaining gas-permeable film.

While traditional vacuum skin packaging as described above has proven to be advantageous for many packaging applications, difficulties in peeling the gas-impermeable film from the gas-permeable film can occur when the packaged meat product has a relatively high profile or is relatively bulky, such as, e.g., fresh beef roasts, in comparison with smaller cuts of meat such as steaks. For such high-profile meat cuts, a different type of "re-bloomable" package has been developed in which the meat product is first placed into a gas-permeable pouch and then the interior of the pouch is evacuated and the pouch is sealed closed. The sealed gas-permeable pouch with the meat product therein is next placed into an outer, gas-impermeable pouch, and a second vacuum and sealing step is performed to enclose the gas-permeable pouch within the gas-impermeable pouch. When it is desired to display the meat product for customer purchase at retail, the outer pouch is opened and the inner, gas-permeable pouch is placed in a display case after the meat product has re-bloomed (by virtue of oxygen contact with the meat via the gas-permeable inner pouch). While such a package avoids the peeling difficulties attendant with vacuum-skin packaging of high-profile meat cuts, other problems are encountered. It is desired for the inner pouch to be tightly contoured to the surface of the meat product. This is both for aesthetic reasons and to minimize purge, i.e., unsightly juices from the meat which otherwise collect between the meat surface and interior surface of the inner pouch. It has been found, however, that the second vacuum step causes the inner pouch to assume a looser fit about the meat product, thereby allowing purge to accumulate between the meat product and pouch. Not only is such a condition commercially unacceptable from an aesthetic standpoint, but the amount of time that the meat product stayed in bloom was found to decrease from the normal three-day period to approximately one day. Moreover, from a packaging standpoint, the two-step vacuum and sealing operation is an unacceptably long and cumbersome process.

Accordingly, there is a need in the art for a re-bloomable package for high-profile meat products which avoids the foregoing shortcomings of coventional packages.

### SUMMARY OF THE INVENTION

That need is met by the present invention, one aspect of which is directed to a package comprising:
an inner, gas-permeable enclosure containing therein a product and having an exterior surface and an interior surface, the interior surface being in contact with the product and the gas-permeable enclosure comprising a thermoplastic film that conforms to the contour of the product; and
an outer, substantially gas-impermeable enclosure containing therein the gas-permeable enclosure, the gas-impermeable enclosure having an exterior surface and an interior surface, the interior surface being in contact with the exterior surface of the gas-permeable enclosure, at least one of the exterior surface of the gas-permeable enclosure and the interior surface of the gas-impermeable enclosure comprising a reactively-modified surface such that the gas-impermeable enclosure is bonded to the gas-permeable enclosure and peelably removable therefrom at a bond-strength ranging from about 0.2 to about 15 Newtons/meter.

Another aspect of the invention is directed to a method for making a peelable, laminated tube for packaging a product. The method comprises:
a) providing two webs of a substantially gas-impermeable film, each of the webs having two major surfaces;
b) providing a web of a gas-permeable film in the form of a substantially flattened tube, the gas-permeable tube having two major surfaces;
c) juxtaposing the gas-impermeable webs and gas-permeable tube such that the gas-permeable tube is positioned between the gas-impermeable webs with each of the two major surfaces of the gas-permeable tube being adjacent one of the major surfaces of each of the gas-impermeable webs to form a pair of adjacent tube and web surfaces;
d) treating at least one of the surfaces of each of the pair of adjacent tube and web surfaces to form at least one reactively-modified surface on each pair of adjacent surfaces;
e) applying sufficient pressure to the juxtaposed webs and tube that each of the gas-impermeable webs bond with one of the two major surfaces of the gas-permeable tube, thereby forming a laminated tube in which the gas-impermeable webs enwrap the gas-permeable tube and are peelably bonded to the tube at a bond-strength ranging from about 0.2 to about 15 Newtons/meter.

In accordance with an alternative method of the invention, only a single web of gas-impermeable film is used to make a peelable, laminated tube for packaging a product. The method includes the following steps:
a) providing a web of a substantially gas-impermeable film having two longitudinal edges and two major surfaces;
b) treating at least one of the two major surfaces of the gas-impermeable web to form a reactively-modified surface thereon;
c) providing a web of a gas-permeable film in the form of a tube having an exterior surface;
d) wrapping the gas-impermeable web about the exterior surface of the gas-permeable tube such that
   the reactively-modified surface of the web is in contact with the exterior surface of the tube, and
   the longitudinal edges of the gas-impermeable web are in contact with one another; and
e) applying sufficient pressure to the gas-permeable tube, gas-impermeable web and longitudinal edges thereof that the reactively-modified surface of the gas-impermeable web bonds to the exterior surface of the gas-permeable tube and the longitudinal edges bond to one another to form a laminated tube in which the gas-impermeable web enwraps the gas-permeable tube and is peelably bonded to the tube at a bond-strength ranging from about 0.2 to about 15 Newtons/meter.

Packages in accordance with the invention can be made by severing a predetermined length of the laminated tube and forming a pouch therefrom having one opening, and then inserting a product therein and sealing closed the opening so that the resultant package has an inner portion formed from the gas-permeable tube and a peelable outer portion formed from the gas-impermeable web or webs (depending upon whether one or two webs are used to form the laminated tube). Where the product is a fresh red meat product, the inner portion of the package is preferably evacuated of air to enhance the shelf-life of the product. An advantageous feature of the invention is that, since the pouch from which the package is formed comprises an outer, gas-impermeable portion which is integral with the inner, gas-permeable portion, only one evacuation step is needed to remove air from within the package. This avoids the above-described difficulties of using a two-pouch packaging system which requires two separate evacuation procedures. At the same time, since the gas-impermeable enclosure portion of the package is peelably removable from the inner, gas-permeable enclosure, a fresh red meat product can be displayed for consumer purchase while in a state of re-bloom by simply removing the gas-impermeable enclosure. In this manner, the meat product can be shipped, stored, and displayed in the same package without the need for repackaging.

Yet another aspect of the invention is directed to a gas-permeable, multilayer film, comprising:
a. two exterior layers comprising ethylene/alpha-olefin copolymer; and
b. at least one interior layer comprising ethylene/vinyl acetate copolymer, wherein the total weight percentage of ethylene/vinyl acetate copolymer in the multilayer film is no greater than 60 and the multilayer film is heat-shrinkable. This film is preferably used to form the gas-permeable enclosure of the package.

### DEFINITIONS

As used herein, the term "film" refers to a thermoplastic material, generally in sheet or web form, having one or more layers of polymeric or other materials which may be bonded together by any suitable means well known in the art, e.g., coextrusion, lamination, etc. A film can be a monolayer film (having only one layer), or a multilayer film (having two or more layers).

As used herein, the term "layer" refers to a discrete film component which is coextensive with the film and has a substantially uniform composition. In a monolayer film, the "film" and "layer" would be one and the same.

As used herein, the phrase "interior layer" refers to any layer of a multilayer film having both of its principal surfaces directly adhered to another layer of the film.

As used herein, the phrase "exterior layer" refers to any layer of a multilayer film having only one of its principal surfaces directly adhered to another layer of the film. In the multilayer films of the present invention, there are two exterior layers, each of which has a principal surface adhered to only one other layer of the multilayer film. The other principal surface of each of the two exterior layers form the two principal outer surfaces of the multilayer film.

"Lamination," "laminate," "laminated" and the like refer to a multiple-film or multiple-web composite structure having two or more films or webs that are bonded together by any suitable means, including adhesive bonding, reactive surface modification, heat treatment, pressure treatment, etc., including combinations thereof. In accordance with the present invention, the films or webs are preferably bonded by reactive surface modification.

As used herein, the phrases "reactive surface modification," "reactively modifying the surface of," "reactively-modified surface" and the like refer to chemically altering the surface of a film in order to incorporate reactive species onto such film surface, e.g., to provide the film surface with auto-adhesion functionality (i.e., rendering the surface capable of adhering to another surface without the need for an adhesive). Specific examples of reactive surface modification include corona treatment, plasma (ionized gas) treatment, and flame treatment, with corona treatment being preferred. The surface of a film which has been subjected to reactive surface modification is referred to as a "reactively-modified surface."

As used herein, the phrase "gas-permeable" refers to a film or web which admits at least about 1,000 cc of gas, such as oxygen, per square meter of film per 24 hour period at 1 atmosphere and at a temperature of 73°F (at 0% relative humidity). More preferably, a gas-permeable film or web admits at least 5,000, even more preferably at least 8,000 such as at least 10,000, 15,000, 20,000, 25,000, 30,000, 35,000, 40,000, and 50,000, and most preferably at least 100,000 cc of oxygen per square meter per 24 hour period at 1 atmosphere and at a temperature of 73°F (at 0% relative humidity). In accordance with the present invention, a gas-permeable film or web can itself have the aforedescribed levels of gas permeability or, alternatively, can be a film or web which does not inherently possess such levels of gas permeability but which is altered, e.g., perforated, to render the film or web gas-permeable as defined above.

As used herein, the phrase "substantially gas-impermeable" refers to a film or web which admits less than 1000 cc of gas, such as oxygen, per square meter of film per 24 hour period at 1 atmosphere and at a temperature of 73°F (at 0% relative humidity). More preferably, a substantially gas-impermeable film or web admits less than about 500, such as less than 30C, and less than 100 cc of gas, more preferably still less than about 50 cc, and most preferably less than 25 cc, such as less than 20, less than 15, less than 10, less than 5, and less than 1 cc of gas per square meter per 24 hour period at 1 atmosphere and at a temperature of 73°F (at 0% relative humidity).

As used herein, the term "bond-strength" refers to the amount of force required to peelably separate two films or webs which are bonded together, e.g., laminated, in accordance with ASTM F904-91, and is reported in units of force/width of the laminated films.

As used herein, the terms "heat-shrinkable," "heat-shrink" and the like refer to the tendency of a film, generally an oriented film, to shrink upon the application of heat, i.e., to contract such that the size (area) of such film in an unrestrained state decreases or the tension of such film in a restrained state increases. As a corollary, the term "heat-contracted" refers to a heat-shrinkable film, or a portion thereof, which has been exposed to heat such that the film or film portion is in a heat-shrunken state, i.e., reduced in size (unrestrained) or under increased tension (restrained).

As used herein, the term "oriented" or "stretch-oriented" refers to a film which has been stretched at an elevated temperature (the orientation temperature), followed by being "set" in the stretched configuration by cooling the material while substantially retaining the stretched dimensions. A film can be stretched in one direction (uniaxial orientation), two directions (biaxial orientation), or multiple directions. Biaxial orientation typically occurs in two directions which are perpendicular to one another, such as the machine direction (i.e., along the longitudinal dimension of the film) and the transverse direction (i.e., transverse to the machine direction). Upon reheating, an oriented film will shrink in the direction of orientation.

As used herein, the phrase "orientation ratio" refers to the multiplication product of the extent to which a film is expanded in any one direction during the orientation process. Thus, an orientation ratio of, e.g., 2:1 in the machine direction, indicates that the film has been expanded to twice its original dimension in the machine direction of the film. When a film is biaxially oriented, the orientation ratios are conventionally expressed as "[machine direction (MD) ratio] X [transverse direction (TD) ratio]" or "[TD ratio] X [MD ratio]," however designated. Thus, a biaxial orientation ratio of 2:1 in the MD and 3:1 in the TD would be expressed as a "MD X TD orientation ratio of 2:1 X 3:1" or, more simply, "2 X 3."

As used herein, the phrase "ethylene/alpha-olefin copolymer" generally designates copolymers of ethylene with one or more comonomers selected from C₃ to C₂₀ alpha-olefins, such as 1-butene, 1-pentene, 1-hexene, 1-octene, methyl pentene and the like, in which the polymer molecules comprise long chains with relatively few side chain branches. These polymers are obtained by low pressure polymerization processes and the side branching which is present will be short compared to non-linear polyethylenes (e.g., LDPE, a low density polyethylene homopolymer). Ethylene/alpha-olefin copolymers generally have a density in the range of from about 0.86 g/cc to about 0.94 g/cc. The term linear low density polyethylene (LLDPE) is generally understood to include that group of ethylene/alpha-olefin copolymers which fall into the density range of about 0.915 to about 0.94 g/cc. Sometimes linear polyethylene in the density range from about 0.926 to about 0.94 is referred to as linear medium density polyethylene (LMDPE). Lower density ethylene/alpha-olefin copolymers may be referred to as very low density polyethylene (VLDPE, typically used to refer to the ethylene/butene copolymers available from Union Carbide with a density ranging from about 0.88 to about 0.91 g/cc) and ultra-low density polyethylene (ULDPE, typically used to refer to the ethylene/octene copolymers supplied by Dow).

The phrase "ethylene/apha-olefin copolymer" also includes homogeneous polymers such as metallocene-catalyzed EXACT™ linear homogeneous ethylene/alpha-olefin copolymer resins obtainable from the Exxon Chemical Company, of Baytown, Texas; TAFMER™ linear homogeneous ethylene/alpha-olefin copolymer resins obtainable from the Mitsui Petrochemical Corporation; and long-chain branched, metallocene-catalyzed homogeneous ethylene/alpha-olefin copolymers available from The Dow Chemical Company, known as AFFINITY™ resins. The phrase "homogeneous polymer" refers to polymerization reaction products of relatively narrow molecular weight distribution and relatively narrow composition distribution. Homogeneous polymers are structurally different from heterogeneous polymers (e.g., ULDPE, VLDPE, LLDPE, and LMDPE) in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysts, rather than using Ziegler-Natta catalysts. Such single-site catalysts typically have only one type of catalytic site, which is believed to be the basis for the homgeniety of the polymers resulting from the polymerization.

As used herein, the term "olefin" generally refers to any one of a class of monounsaturated, aliphatic hydrocarbons of the general formula CₙH₂ₙ, such as ethylene, propylene, and butene. The term may also include aliphatics containing more than one double bond in the molecule such as a diolefin or diene, e.g., butadiene.

As used herein, the term "free shrink" refers to the unrestrained linear thermal shrinkage of a film subjected to a specified elevated temperature as determined in accordance with ASTM D 2732-83.

As used herein, the term "heat-seal" (also known as a "heat-weld") refers to the union of two films by bringing the films into contact, or at least close proximity, with one another and then applying sufficient heat and pressure to a predetermined area (or areas) of the films to cause the contacting surfaces of the films in the predetermined area to become molten and intermix with one another, thereby forming an essentially inseparable bond between the two films in the predetermined area when the heat and pressure are removed therefrom and the area is allowed to cool. In accordance with the practice of the present invention, a heat-seal preferably creates a hermetic seal, i.e., a barrier to the outside atmosphere.

### BRIEF DESCRIPTION OF THE DRAWINGS

A detailed description of preferred embodiments of the invention follows, with reference to the accompanying drawings, wherein:
Fig. 1 is a perspective view of a package in accordance with the invention;
Fig. 2 is a cross-sectional view of the package of Fig. 1 taken along line 2-2;
Fig. 3 is a schematic illustration of a process for making a laminated tube in accordance with the present invention;
Fig. 4 is a perspective, schematic illustration of a process for converting the tube of Fig. 3 into a pouch;
Fig. 5 is a perspective view of the package of Fig. 1, wherein an outer, gas-impermeable film sheet is being peelably removed from the package;
Fig. 6 is an enlarged view of Fig. 2, showing peel tabs which facilitate peeling of the gas-impermeable film sheets from the package; and
Fig. 7 is similar to the cross-sectional view of Fig. 2, but illustrates an alternative embodiment of the invention.

### DETAILED DESCRIPTION OF THE PREFERRED EMBODIMENTS

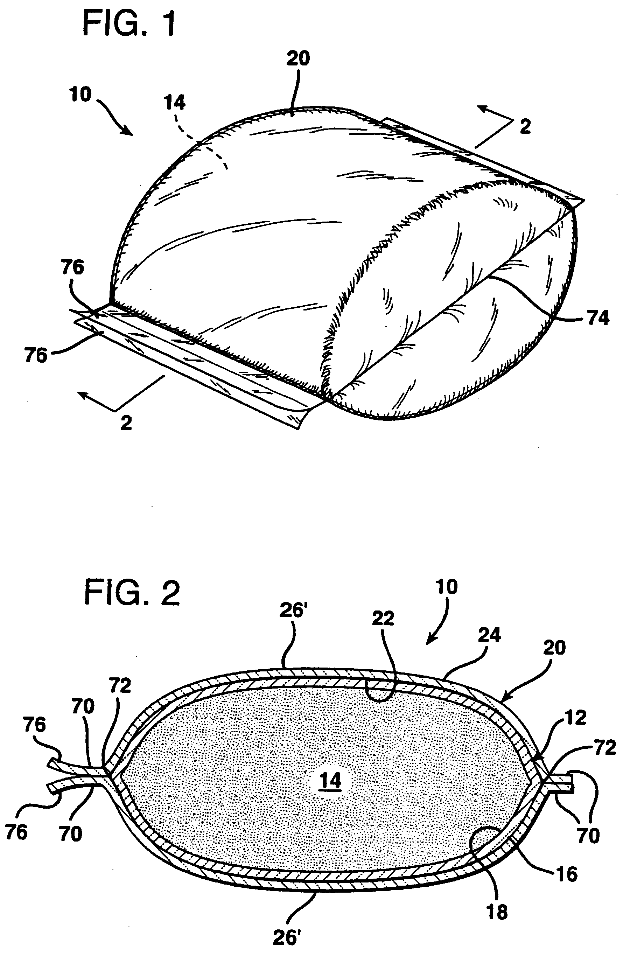

Figs. 1 and 2 illustrate a package 10 in accordance with the present invention for a fresh red meat product, such as a beef roast as shown. The package comprises an inner, gas-permeable enclosure 12 containing therein a product 14. Specifically, gas-permeable enclosure 12 has an exterior surface 16 and an interior surface 18, and comprises a thermoplastic film that conforms to the contour of product 14 such that interior surface 18 is in intimate contact with the product as shown.

Package 10 further comprises an outer, substantially gas-impermeable enclosure 20 containing therein the inner, gas-permeable enclosure 12 and product 14 as described above. Gas-impermeable enclosure 20 has an exterior surface 24 and an interior surface 22. The interior surface 22 is in contact with and bonded to the exterior surface 16 of gas-permeable enclosure 12 while the exterior surface 24 of the gas-impermeable enclosure 20 forms the outermost or exterior surface of the package 10 prior to the peelable removal of the enclosure 20 from the package (discussed in more detail below). As is also discussed in more detail below, at least one of the exterior surface 16 of the gas-permeable enclosure 12 and the interior surface 22 of the gas-impermeable enclosure 20 comprises a reactively-modified surface such that the gas-impermeable enclosure 20 is bonded to the gas-permeable enclosure 12 and peelably removable therefrom at a bond-strength ranging from about 0.2 to about 15 Newtons/meter.

Although any product can be packaged within package 10, such package in accordance with the present invention is most advantageously utilized for products which are desirably packaged for shipment and storage in one environment, e.g., a low-oxygen environment, and then displayed in the presence of atmospheric oxygen. Such products include, but are not limited to, fresh red meat products (e.g., beef, veal, lamb, pork, etc.), poultry, fish, cheese, fruits, or vegetables.

Preferably, gas-permeable enclosure 12 comprises a heat-shrinkable film that is tightly heat-contracted about the contour of product 14 to give a tight, aesthetically-appealing package appearance as well as minimizing the collection of meat purge between the product and interior surface 18 of gas-permeable enclosure 12. A preferred film structure for gas-permeable enclosure 12 includes two exterior layers comprising ethylene/alpha-olefin copolymer and at least one interior layer comprising ethylene/vinyl acetate copolymer, wherein the total weight percentage of ethylene/vinyl acetate copolymer in the multilayer film is no greater than 60, preferably no greater than 55, and most preferably no greater than 50 (such weight percentages being based on the total weight of the film). The ethylene/alpha-olefin copolymer is preferably a homogeneous ethylene/alpha-olefin copolymer such as, e.g., a homogeneous ethylene/octene-1 copolymer as commercially available from resin suppliers such as Dow Chemical or Exxon. Specific examples of suitable resins are set forth in the Examples below.

The film from which gas-permeable enclosure 12 is formed preferably has an oxygen transmission rate of at least 16,000 cc-mil/m²-atm.-24 hrs. Thus, for a film having a thickness of 1 mil, the oxygen transmission thereof is preferably at least 16,000 cc/m²-atm.-24 hrs.; a film having a thickness of 2 mils preferably has an oxygen transmission rate of at least 8,000 cc/m²-atm.-24 hrs.; etc. Films having such minimum oxygen transmission rates have been found capable of promoting re-bloom when used as a gas-permeable enclosure for a fresh red meat product in accordance with the present invention, particularly when the film has a thickness of 5 mils or less, preferably 4 mils or less, more preferably 3 mils or less, and most preferably 2 mils or less so that the oxygen transmission rate is at least about 8,000 cc/m²-atm.-24 hrs.

The film for gas-permeable enclosure 12 is preferably heat-shrinkable, and is thus preferably oriented in at least one direction, more preferably biaxially oriented. In this regard, the film is preferably oriented in at least one direction at an orientation ratio of at least about 1.5:1, more preferably at least about 2:1, even more preferably at least about 2.5:1, and most preferably at least about 3:1. The film is more preferably biaxially oriented at an orientation ration (TD X MD) of at least about 1.5:1 X 1.5:1, yet more preferably 2:1 X 2:1, more preferably still 2.5:1 X 2.5:1, and most preferably at least about 3:1 X 3:1. The film preferably has a free shrink, at a temperature of about 185°F, of at least about 10 percent in at least one direction, more preferably at least about 20 percent, more preferably still at least about 30 percent, yet more preferably at least about 40 percent, and most preferably at least about 50 percent in at least one direction, and preferably in both the transverse and machine directions.

A specifically preferred film for gas-permeable enclosure 12 is a coextruded, six-layer film having the following structure:
HEAO/HEAO/EVA/EVA/EVA/HEAO,
where "HEAO" designates homogeneous ethylene/alpha-olefin copolymer and "EVA" designates ethylene/vinyl acetate copolymer.

Gas-impermeable enclosure 20 may be formed from any suitable film which provides a substantial barrier to the passage of oxygen gas therethrough. In this regard, any well known oxygen-barrier material may be included in the film, such as, e.g., vinylidene chloride copolymer (saran), nylon, polyethylene terephthalate, ethylene/vinyl alcohol copolymer (EVOH), silicon oxides (SiOx), etc. The film is preferably heat-shrinkable and capable of being peelably bonded to the gas-permeable enclosure 12 as described above. A preferred film for gas-impermeable enclosure 20 has the following film structure:
PE/TIE/EVOH/TIE/PE,
where:
"PE" is a polyethylene-based material such as, e.g., a blend of 50 wt.% LLDPE, 25 wt.% LMDPE, and 25 wt.% EVA or, alternatively, 50 wt.% LMDPE and 50 wt.% VLDPE;
"TIE" is any suitable adhesive material such as, e.g., anhydride-modified LLDPE; and
"EVOH" is any suitable ethylene/vinyl alcohol copolymer and is preferably blended with a polyamide (e.g., PA 6/12 copolymer) at any desired blend, e.g., 90 wt.% EVOH and 10 wt.% PA. Such a film is described in further detail in U.S. Pat. No. 4,724,185, the disclosure of which is hereby incorporated herein by reference. However, it should be understood that this is merely an example of a suitable film for gas-impermeable enclosure 20, and that such film is not a required feature of the present invention.

As noted above, the bond-strength between gas-permeable enclosure 12 and gas-impermeable enclosure 20 ranges from about 0.2 to about 15 Newtons per meter of film width. A bond-strength falling within these ranges provides a balance between sufficient adhesion to prevent premature separation of gas-permeable enclosure 12 from gas-impermeable enclosure 20, e.g., during manufacture, shipping and storage, and sufficient peelability so that gas-impermeable enclosure 20 can be separated from gas-permeable enclosure 12 at retail without tearing or otherwise compromising the gas-permeable enclosure. A bond-strength of more than about 15 Newtons/meter results in a package that is overly difficult to peel, while a bond strength of less than about 0.2 Newtons/meter creates a greater likelihood of premature separation of gas-impermeable enclosure 20 from gas-permeable enclosure 12. More preferably, the bond-strength between the two enclosures ranges from about 1 to about 10 Newtons per meter and, most preferably, the bond-strength ranges from 2 to 5 Newtons per meter.

The inventors have found that providing a desired bond-strength falling within the range of 0.2 to 15 N/m between gas-permeable enclosure 12 and gas-impermeable enclosure 20 is most reliably achieved via reactive surface modification of the interior surface 22 of gas-impermeable enclosure 20 and/or the exterior surface 16 of gas-permeable enclosure 12. More preferably, both surfaces 22 and 16 are reactively modified. Reactive surface modification was found to be superior to other lamination techniques, such as adhesive or thermal lamination, because reactive surface modification provides a beneficial combination of consistency and reliability in the resultant bond-strength between the permeable and impermeable enclosures while also providing manufacturing efficiency and economy. Reactive surface modification is particularly advantageous relative to adhesive lamination in that an adhesive, when used to bond the permeable and impermeable enclosures, can impair the gas-permeability of gas-permeable enclosure 12 by leaving a residue on the exterior surface 16 after the gas-impermeable enclosure 20 has been peelably removed.

In a preferred embodiment of the invention, surfaces 16 and/or 22 are reactively modified via exposure of one or both surfaces to corona radiation. Corona radiation may be employed to form a laminate which is delaminatable at any desired peel force, depending on the component resins of the adjacent bonding surfaces of the films being laminated, and also the degree of surface exposure to the corona radiation. In general, corona radiation may be applied to surfaces 12 and/or 22 at an energy level ranging from about 20 Joule/m² to about 500 Joule/m². Preferably, the corona radiation ranges from about 50 Joule/m² to about 250 Joule/m² and, more preferably, from about 100 Joule/m² to about 200 Joule/m². Corona treatment units are commercially available, e.g., from Enercon Industries Corporation of Menomonee Falls, WI. Such corona treatment units generally include an electrode and a grounding surface to which the electrode discharges when supplied with sufficient electrical power. A film to be treated is passed between the electrode and grounding surface, and is thus exposed to the radiation emanating from the electrode. Although the mechanism by which corona treatment enhances bonding between two film surfaces is not completely understood, it is believed that the corona radiation ionizes the air adjacent the film surface to be treated, thereby causing an oxidation reaction between the ionized air and film surface which produces adhesion-enhancing molecules or moieties thereof on the corona-treated film surface.

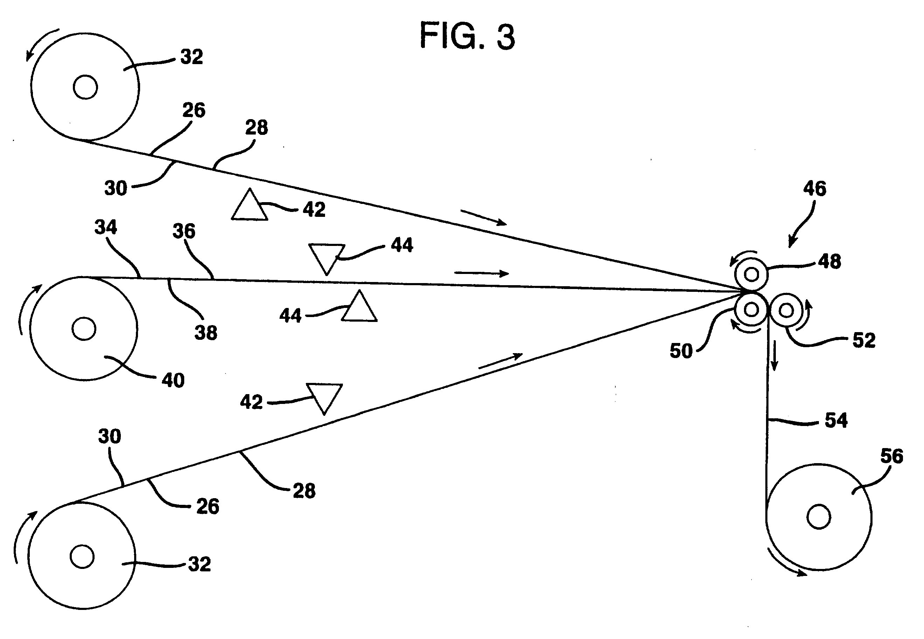

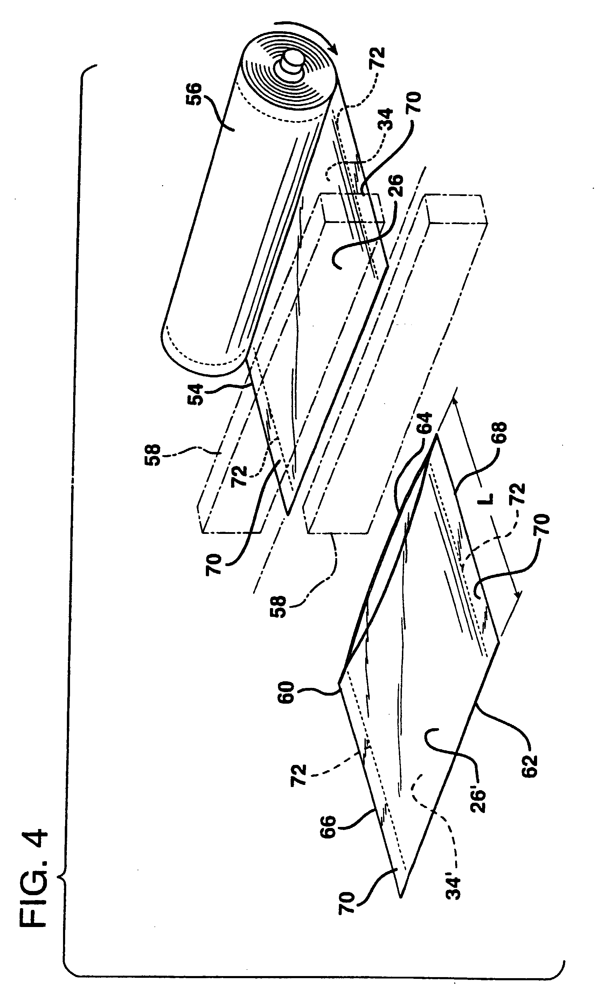

Referring now to Fig. 3, a method for making package 10 will be described. The method begins with the preparation of a peelable, laminated tube by providing two webs 26 of a substantially gas-impermeable film, each of the webs having two major surfaces 28 and 30. As shown, webs 26 are supplied from storage rolls 32. A web of a gas-permeable film in the form of a substantially flattened tube 34 is also provided, the gas-permeable tube having two major surfaces 36 and 38. The gas-permeable tube 34 is supplied from storage roll 40. As shown, the gas-impermeable webs 26 and gas-permeable tube 34 are juxtaposed such that the gas-permeable tube is positioned between the gas-impermeable webs with each of the two major surfaces 36 and 38 of the gas-permeable tube being adjacent one of the major surfaces 30 of each of the gas-impermeable webs to form a pair of adjacent tube and web surfaces. Each pair of adjacent tube and web surfaces 30,36 and 30,38, respectively, is treated to form at least one reactively-modified surface on each pair of adjacent surfaces. Preferably, both of the surfaces of each of the pair of adjacent tube and web surfaces 30,36 and 30,38, respectively, are treated to form reactively-modified surfaces thereon. As noted above, such treatment to form reactively-modified surfaces preferably includes exposure of the intended web surfaces to corona radiation. This is illustrated in Fig. 3 where corona-treatment units 42 each apply corona radiation to substantially the entire inner surface 30 of each of gas-impermeable webs 26, and corona treatment units 44 each apply corona radiation to substantially the entirety of both surfaces 36 and 38 of gas-permeable tube 34. The juxtaposed and corona-treated webs 26 and tube 34 are then directed toward and converge in nip roll station 46 wherein nip rolls 48, 50, and 52 apply sufficient pressure to the webs and tube that each of the gas-impermeable webs 26 bond with gas-permeable tube 34 at a respective one of the two major surfaces 36 and 38 thereof. In this manner, a laminated tube 54 is formed in which the gas-impermeable webs 26 enwrap the gas-permeable tube 34 and are peelably bonded to the tube at a bond-strength ranging from about 0.2 to about 15 Newtons/meter, depending, e.g., upon the amount of corona radiation applied by treatments units 42 and 44 as desired to suit the particular packaging application for laminated tube 54. Laminated tube 54 is then gathered and wound on storage roll 56 for future use as explained below. Alternatively, the laminated tube 54 may be fed directly through sealing and severing apparatus 58 as shown in Fig. 4

Referring now to Fig. 4, laminated tube 54 is unwound from roll 56 and guided through sealing and severing apparatus 58 which converts the tube into a pouch. Sealing and severing apparatus 58 severs a predetermined length L of laminated tube 54 from the remainder of the laminated tube such that the severed laminated tube or pouch 60 has a lower end 62, an upper end 64, and sides 66 and 68. Without further action by apparatus 58, both ends 62 and 64 of the severed tube 60 would be open. However, in one embodiment, apparatus 58 seals closed lower end 62 (either simultaneously with or shortly after the severing step) to form a pouch having one opening at end 64 as shown. (Alternatively, apparatus 58 may seal closed upper end 64 and leave open lower end 62.) Such a pouch is known as an "end-seal" pouch because end 64 is the final portion of the pouch to be sealed closed after a product has been inserted into the pouch via the end 64. In another embodiment, sealing and severing apparatus 58 forms a "side-seal" pouch by sealing closed both of ends 62 and 64 and slitting open another portion of the severed laminated tube 60, typically one of sides 66 or 68. In this instance, a product to be packaged is inserted into the pouch via the open side and such side opening is then sealed closed as the final step in the packaging operation. The openings are preferably sealed closed by applying sufficient heat and pressure to the openings to form a "heat-seal," a technique which is well known in the art. It is also preferred that the initial seals formed by sealing and severing apparatus 58 are heat-seals as well.

Regardless of whether an "end-seal" or "side-seal" pouch is made, the resultant pouch has one opening, either at one of ends 62 or 64 or one of sides 66 or 68; an inner portion which will be in direct contact with the packaged product and formed from the gas-permeable tube 34 (now severed gas-permeable tube 34' in Fig. 4); and a peelable outer portion formed from the gas-impermeable webs 26 (now severed gas-impermeable film sheets 26' in Fig. 4). As described in more detail below, package 10 as shown in Figs. 1 and 2 is formed by inserting a product into the pouch formed from severed tube 60 and sealing closed the side or end opening. The inner portion of the pouch formed by the severed gas-permeable tube 34' thus becomes inner, gas-permeable enclosure 12 while the outer portion formed from gas-impermeable film sheets 26' becomes the outer, gas-impermeable enclosure 20. Thus, with reference to Figs. 1-4 collectively, it can be seen that at least one but more typically two edges of the film sheets 26' of gas-impermeable enclosure 20 are substantially coextensive with and bonded to a corresponding edge of tube 34' of gas-permeable enclosure 12 at ends 62 and 64 the of the severed tube 60 as a result of the severing operation performed by sealing and severing apparatus 58. In addition, gas-impermeable webs 26 are preferably wider than gas-permeable tube 34 so that at least one edge portion, but preferably two edge portions 70, of each of the gas-impermeable webs 26 and film sheets 26' extend beyond a corresponding edge or edges 72 of the gas-permeable tube 34 and severed tube 34' (Fig. 4) and also beyond edges 72 of gas-permeable enclosure 12 (Fig. 2). Preferably, the edge portions 70 of each of the gas-impermeable webs 26 and film sheets 26' are substantially coextensive with and bonded to a corresponding edge portion 70 of the other film sheet as shown. The edge portions 70 are preferably bonded via reactive-surface treatment and pressure, more preferably during the lamination process as illustrated in Fig. 3, by treating the entire width of surfaces 30 of webs 26 so that edge portions 70 of each web 26 are bonded together when laminated tube 54 emerges from nip roll station 46. Most preferably, nip roll 52 exerts additional pressure in the area of edge portions 70 to ensure a good bond of film sheets 26' to one another. In this manner, gas-permeable enclosure 12 and product 14 are fully enclosed within gas-impermeable enclosure 20.

It is preferred that, after a pouch 60 has been formed from laminated tube 54 as shown in Fig. 4 and a product to be packaged has been inserted therein, the interior portion of the pouch is at least partially evacuated prior to sealing closed the opening of the pouch. Preferably, the evacuation of the pouch interior is nearly complete such that as little air as possible remains within the resultant package. This is both to enhance the preservation of the packaged product 14 and also to ensure that the permeable and impermeable enclosures 12 and 20 conform to the contour of product 14, particularly gas-permeable enclosure 12 since that is the only enclosure portion of package 10 that consumers will see, and it is this enclosure which has the greatest effect on controlling meat purge. When product 14 is a fresh red meat product, pouch 60 is preferably evacuated such that the pressure within package 10 is no greater than about 10 torr, more preferably no greater than about 5 torr, even more preferably no greater than about 3 torr and, most preferably, as close to zero torr as possible.

It is also preferred that gas-permeable tube 34, and preferably also gas-impermeable webs 26, are formed from films which are heat-shrinkable as noted above. Following the evacuation and heat-seal closure of pouch 60 to form package 10, the package is heated sufficiently to cause at least the gas-permeable enclosure 12, and preferably also the gas-impermeable enclosure 20, to heat-contract about the contour of the product. Although evacuation of the package interior alone may be sufficient in many cases, in other cases evacuation without heat-shrinking the gas-permeable enclosure 12 may leave wrinkles which can collect purge. Heat-shrinking removes or minimizes the wrinkles, helps to eliminate purge, and generally makes a more attractive package.

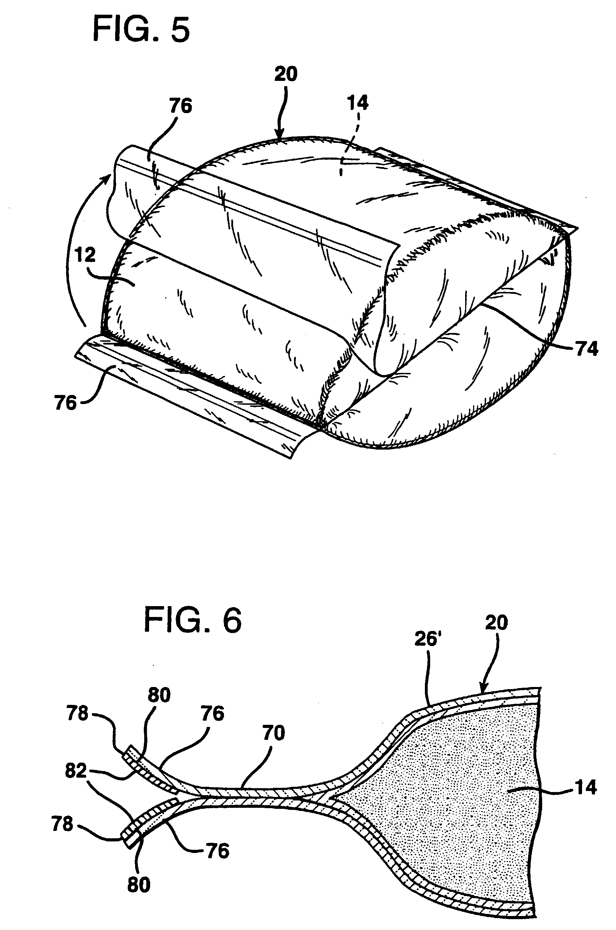

The end result of the laminating and packaging processes as described hereinabove is a package 10 as shown in Figs. 1 and 2. A heat-seal 74 as formed at one of ends 62 or 64 of the severed laminated tube (pouch) 60 is shown in Fig. 1. A second heat-seal as formed at the other of the two ends 62 or 64 is also part of package 10, but is not shown in the view of package 10 as illustrated in Fig. 1. Bonded edge portions 70 are illustrated, as are outer segments or peel tabs 76 of one of the bonded edge portions 70 which are not bonded, thereby providing a peel-initiation mechanism for the gas-impermeable enclosure 20. That is, when it is desired to remove gas-impermeable enclosure 20 from gas-permeable enclosure 12, e.g., at retail, both of peel tabs 76 are manually grasped (typically by a retail worker) and at least one of the gas-impermeable film sheets 26' of enclosure 20 are peelably removed as shown in Fig. 5. In this manner, at least the upper portion of a meat product 14 re-blooms to a consumer-preferred red color by virtue of atmospheric oxygen contact with the meat product through the now-exposed gas-permeable enclosure 12. At the same time, the remaining gas-permeable enclosure 12 continues to protect the product from dust, dirt, moisture, and microbial as well as other contaminates. Peel tabs 76 may be provided by coating predetermined outer segments of one or more of the bonded edge portions 70 with a material that will not bond when exposed to corona or other surface-modification radiation. Alternatively, as illustrated in Fig. 6, strips of film 78 or other material that form a bond with the corona-treated surface of gas-impermeable film sheet 26' on one surface 80 but not with one another on the opposing surface 82 may be added, e.g., during the aforedescribed lamination process (to one of sides 66 or 68 of the laminated tube), to prevent bonding of an outer segment of one of the otherwise bonded edge portions 70. Film strips 78 may be formed from thermoplastic, polyolefin materials such as, e.g., low density polyethylene (LDPE), high density polyethylene (HDPE), ionomer, etc.

If desired, a pad of an absorbent material may be included within the pouch, e.g., at the bottom of the pouch so that it is not readily visible to the consumer, to absorb any purge which may be present in the pouch. The pad may be adhered to the interior surface 18 of gas-permeable enclosure 12. Such absorbent pads are well known in the art.

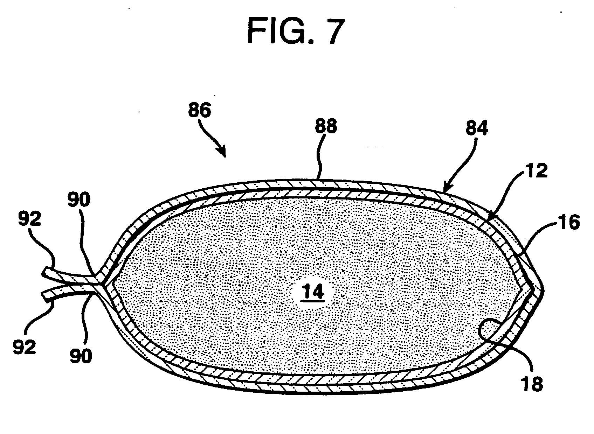

Referring now to Fig. 7, an alternative embodiment of the invention will be described. In this embodiment, the gas-impermeable enclosure comprises a single gas-impermeable film or web wrapped about and bonded to the exterior surface of the gas-permeable enclosure, as opposed to a pair of gas-impermeable webs 26 which form gas-impermeable film sheets 26' as described hereinabove. Thus, package 86 is similar in all respects to package 10 as shown in Figs. 1 and 2, except that gas-impermeable enclosure 84 includes a single gas-impermeable film sheet 88 which enwraps and is bonded to the exterior surface 16 of gas-permeable enclosure 12. Gas-impermeable enclosure 84 includes a pair of edge portions 90 which extend outwardly from the gas-permeable enclosure and are bonded together. As with package 10, edge portions 90 preferably include outer segments 92 that are not bonded, thereby providing a peel-initiation mechanism, i.e., a pair of peel tabs, for the peelable removal of gas-impermeable enclosure 84.

Package 86 may be produced in same manner as described above with respect to package 10, except that only a single web of a gas-impermeable film is used to enwrap the gas-permeable tube. One of the two major surfaces of the gas-impermeable web, and preferably also the exterior surface of the gas-permeable tube, are treated to form reactively-modified surfaces thereon. The gas-impermeable web is then wrapped about the gas-permeable tube such that the reactively-modified surface of the web is in contact with the exterior surface of the tube, and longitudinal edges of the gas-impermeable web (corresponding to edge portions 90 in Fig. 7) are in contact with one another. Sufficient pressure is then applied to the gas-permeable tube, gas-impermeable web and longitudinal edges thereof so that the reactively-modified surface of the gas-impermeable web bonds to the exterior surface of the gas-permeable tube and the longitudinal edges bond to one another to form bonded edge portions 90 as shown in Fig. 7. In the resultant laminated tube, from which package 86 is formed, the gas-impermeable web is peelably bonded to the tube at a bond-strength ranging from about 0.2 to about 15 Newtons/meter. In this manner, the gas-impermeable enclosure 84 can be peelably removed from the gas-permeable enclosure 12 to allow a packaged meat product 14 to bloom to a bright red color that consumers associate with freshness.

The invention may be further understood by reference to the following examples, which are provided for the purpose of representation, and are not to be construed as limiting the scope of the invention.

### EXAMPLES

The following resins were used in the examples:
"**HEAO1**" is homogeneous (single-site catalyzed) ethylene/octene-1 copolymer sold by Dow Chemical as AFFINITY PF1140 and having 14 wt.% octene-1, a density of 0.897 g/cc, and a melt index of 1.6.
"**HEAO2**" is homogeneous (single-site catalyzed) ethylene/octene-1 copolymer sold by Dow Chemical as AFFINITY PL1280 and having 13 wt.% octene-1, a density of 0.90 g/cc, and a melt index of 6.0.
"**HEAO3**" is homogeneous (single-site catalyzed) ethylene/octene-1 copolymer sold by Dow Chemical as AFFINITY DPF 1150.01 and having 12.5 wt.% octene-1, a density of 0.901 g/cc, and a melt index of 0.9.
"**HEAO4**" is homogeneous (single-site catalyzed) ethylene/octene-1 copolymer sold by Dow Chemical as AFFINITY DPF 1150.02 and having 12.5 wt.% octene-1, a density of 0.901 g/cc, and a melt index of 0.9.
"**LLDPE**" is heterogeneous linear low density polyethylene sold by Dow Chemical as DOWLEX 2045.03 and having 6.5 wt.% octene-1 copolymer, a density of 0.92 g/cc, and a melt index of 1.1.
"**EVA1**" is ethylene/vinyl acetate copolymer sold by Exxon Chemical as LD-713.93 and having 15 wt.% vinyl acetate, a density of 0.934 g/cc, and a melt index of 3.5.
"**EVA2**" is ethylene/vinyl acetate copolymer sold by Exxon Chemical as ESCORENE 318.92 and having 9 wt.% vinyl acetate, a density of 0.930 g/cc, and a melt index of 2.0.
"**EVA3**" is ethylene/vinyl acetate copolymer sold as ELVAX PE 3507-2 and having 6.2 wt.% vinyl acetate, a density of 0.931 g/cc, and a melt index of 2.6.

### Example 1

A heat-shrinkable, tubular gas-permeable film having the following structure was produced: 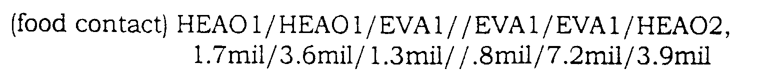 The film had 51 wt.% homogeneous ethylene/alpha-olefin copolymer and 49 wt.% EVA, such weight percentages based on the entire weight of the film.

The EVA1/EVA1/HEAO2 layers were first coextruded as a three-layer tubular film structure then the HEAO1/ HEAO1/EVA1 layers were extrusion coated onto the initial three-layer structure and melt-bonded thereto at the interface designated by the double slashes ("//"). The resultant six-layer tubular film, which had a wall thickness of approximately 18.5 mils (1 mil = 0.001 inch), was then biaxially oriented by maintaining the film at or about its glass transition temperature and passing it over an inflated bubble of air to provide transverse stretching while also stretching in the longitudinal or machine direction. The biaxially oriented tubular film was quenched immediately after stretching and had an average wall thickness of 1.93 mils. The film had an orientation ratio of 3.6:1 in the transverse direction and 2.9:1 in the machine direction (i.e., 3.6 TD X 2.9 MD). The biaxially oriented film was then evaluated and found to have an oxygen transmission rate (OTR) of 16,123 cc-mil/m²-atm.-24 hrs (8354 cc/m²-atm.-24 hrs actual; ASTM D 3985-95), a haze value of 2% (ASTM ASTM D 1003-95), a gloss value of 89% (ASTM D 2457-90), and a total free shrink at 185 °F of 110% (49% in machine direction and 61% in transverse direction; ASTM D 2732-83). Such properties resulted in an excellent film for use as a gas-permeable enclosure for fresh red meat in accordance with the present invention in that the OTR provided excellent re-bloom, the low haze and high gloss provided outstanding optical properties (which serve to enhance the appearance of the package), and the high free shrink ensures that purge from the meat product is minimized or eliminated while providing a tight, aesthetically appealing package.

### Comparative Example 1

A comparative tubular film had the following structure: 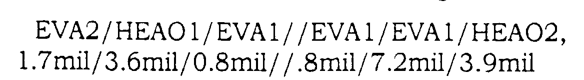 The film had 42 wt.% homogeneous ethylene/alpha-olefin copolymer and 58 wt.% EVA, such weight percentages based on the entire weight of the film. The six-layer film was produced by same method as described above in Example 1. After coextrusion, the tubular film was biaxially oriented at an orientation ration of 3.6 TD X 2.9 MD to achieve a final film thickness of 1.7 mils. The film was found to have an oxygen transmission rate of 12,540 cc-mil/m²-atm.-24 hrs (ASTM D 3985-95). In comparison, the film of Example 1 had a much higher OTR of 16,123 cc-mil/m²-atm.-24 hrs. This was unexpected given that the only difference between the two films was that one outer layer of the Comparative film was composed of EVA while both outer layers of the film of Example 1 comprised homogeneous ethylene/alpha-olefin copolymer.

### Comparative Example 2

Another comparative tubular film had the following structure (all percentages being weight percentages): 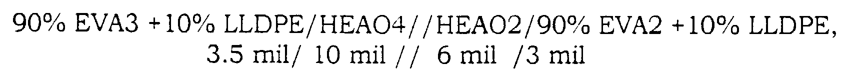 The four-layer film had 74 wt.% homogeneous and heterogeneous ethylene/alpha-olefin copolymer and 26 wt.% EVA, such weight percentages based on the entire weight of the film. The film was produced by same method as described above in Example 1. After coextrusion, the tubular film was biaxially oriented at an orientation ration of 3.3 TD X 3.5 MD to achieve a final film thickness of 2 mils. The film was found to have an oxygen transmission rate of 10,065 cc-mil/m²-atm.-24 hrs (ASTM D 3985-95). In comparision, the film of Example 1 had a much higher OTR of 16,123 cc-mil/m²-atm.-24 hrs. The film of Comparative Example 2 is essentially the inverse of the film of Example 1, i.e., with exterior layers of primarily EVA and interior layers of homogeneous ethylene/alpha-olefin copolymer as opposed to the inventive film having exterior layers of homogeneous ethylene/alpha-olefin copolymer and interior layers of EVA. However, it was not expected that the film of Example 1 would exhibit such a superior oxygen transmission rate over the film of Comparative Film 2.

### Example 2

Fresh beef roasts were packaged in each of the tubular films of Example 1 and Comparative Examples 1 and 2 by severing a section of each tube and sealing one of the severed ends to form pouches, placing a roast in each pouch via an open end thereof, evacuating the interior of the pouches to a pressure of 3 torr, sealing closed the remaining end of the pouches to form an enclosure about the roast, and then placing the enclosed roasts in water maintained at a temperature of 185°F for 3 seconds which was sufficient to cause the enclosures to shrink about the contour of the roasts. The resultant gas-permeable packages were stored in a refrigerated (40°F), low-oxygen environment for 10 days before being placed in a retail display case, also at 40°F, and exposed to atmospheric oxygen. After the color of each of the roasts changed from purple to red (indicating re-bloom), each packaged roast was visually observed over a three-day period for surface discoloration (the amount of undesirable brown color verses the more desirable red color), overall color (bright red being preferred), and consumer acceptability (overall aesthetic desirability). For each of these visual qualities, the roasts packaged in the film of Example 1 were found to be superior to the roasts packaged in the films of both Comparative Examples 1 and 2. That is, the roasts packaged in inventive film 1 exhibited less discoloration, better color, and overall better consumer acceptability than the roasts packaged in the comparative films 1 and 2.

### Example 3

A laminated tube was made as described hereinabove and illustrated in Figs. 3 and 4 by laminating to the tubular film of Example 1 a pair of heat-shrinkable, gas-impermeable films. The gas-impermeable films had the structure PE/TIE/EVOH/TIE/PE are more specifically described in U.S. Pat. No. 4,724,185. Both the exterior surface of the tubular film and the interior surface of the gas-impermeable films were treated by exposure to corona radiation using corona treatment units from Enercon Industries, which provided a corona radiation energy level of 100 Joule/m² to the tube surfaces and a corona radiation energy level of 200 Joule/m² to the film surfaces. The gas-impermeable films were bonded to the gas-permeable tube at a measured bond-strength of about 5 Newtons/meter. 'End-seal' pouches were then formed from the resultant laminated tube, and each pouch was filled with a beef roast (both inside round roasts and boneless blade roasts), evacuated of air to a final pressure of 3 torr, then sealed closed. The resultant packages were immersed in a water bath maintained at 185°F to cause the pouch, i.e., both the gas-permeable and gas-impermeable enclosures, to shrink tightly about the contour of the packaged roast. The heat-shrunk packages were stored under refrigerated conditions (40°F), some for 7 days and some for 14 days. Following the storage period, the gas-impermeable enclosure portion of each package was peelably removed (at a peel force of about 5 Newtons/meter) so that the roasts continued to be packaged only in the gas-permeable enclosure portion of the packages. The gas-impermeable enclosures peeled easily from the gas-permeable enclosures and without tearing or otherwise damaging the gas-permeable enclosures. The packages were placed in a refrigerated retail display case, which was maintained at 40°F, and the packaged roasts re-bloomed within approximately 20 minutes from a purple oxygen color to a red color. Each packaged roast was visually observed over a three-day period for surface discoloration (the amount of undesirable brown color verses the more desirable red color), overall color (bright red being preferred), and consumer acceptability (overall aesthetic desirability). The packaged roasts remained in a state of re-bloom for the entire three day period, and were observed to have excellent aesthetic qualities with very little surface discoloration, a pleasing red color, and very little purge.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention.

## Claims

1. A package, comprising:
an inner, gas-permeable enclosure containing therein a product and having an exterior surface and an interior surface, said interior surface being in contact with the product, said gas-permeable enclosure comprising a thermoplastic film that conforms to the contour of the product; and
an outer, substantially gas-impermeable enclosure containing therein said gas-permeable enclosure, said gas-impermeable enclosure having an exterior surface and an interior surface, said interior surface being in contact with the exterior surface of said gas-permeable enclosure, at least one of said exterior surface of said gas-permeable enclosure and said interior surface of said gas-impermeable enclosure comprising a reactively-modified surface such that said gas-impermeable enclosure is bonded to said gas-permeable enclosure and peelably removable therefrom at a bond-strength ranging from about 0.2 to about 15 Newtons/meter.

2. The package of claim 1, wherein said gas-permeable enclosure comprises a heat-shrinkable film that is heat-contracted about the contour of the product.

3. The package of claim 1, wherein said gas-impermeable enclosure is bonded to said gas-permeable enclosure and peelably removable therefrom at a bond-strength ranging from about 1 to about 10 Newtons per meter.

4. The package of claim 1, wherein said at least one reactively-modified surface is a corona-treated surface.

5. The package of claim 1, wherein said gas-permeable enclosure comprises a thermoplastic film in the form of a tube having an exterior surface.

6. The package of claim 5, wherein said gas-impermeable enclosure comprises a pair of substantially gas-impermeable film sheets bonded to said exterior surface of said gas-permeable enclosure, thereby enclosing said gas-permeable enclosure between said film sheets, each of said film sheets comprising
at least one edge which is substantially coextensive with and bonded to a corresponding edge of said gas-permeable enclosure; and
at least one edge portion which extends beyond a corresponding edge of said gas-permeable enclosure, said edge portion of each of said film sheets being substantially coextensive with and bonded to a corresponding edge portion of the other film sheet.

7. The package of claim 6, wherein one or more outer segments of corresponding edges or edge portions of said film sheets are not bonded, thereby providing a peel-initiation mechanism for said gas-impermeable enclosure.

8. The package of claim 5, wherein said gas-impermeable enclosure comprises a substantially gas-impermeable film wrapped about and bonded to the exterior surface of said gas-permeable enclosure, said gas-impermeable film comprising
at least one edge which is substantially coextensive with and bonded to a corresponding edge of said gas-permeable enclosure; and
a pair of edge portions which extend outwardly from said gas-permeable enclosure and are bonded together.

9. The package of claim 8, wherein one or more outer segments of each of said pair of edge portions of said gas-impermeable film are not bonded, thereby providing a peel-initiation mechanism for said gas-impermeable enclosure.

10. A method for making a peelable, laminated tube for packaging a product, comprising:
a) providing two webs of a substantially gas-impermeable film, each of said webs having two major surfaces;
b) providing a web of a gas-permeable film in the form of a substantially flattened tube, said gas-permeable tube having two major surfaces;
c) juxtaposing said gas-impermeable webs and gas-permeable tube such that said gas-permeable tube is positioned between said gas-impermeable webs with each of the two major surfaces of said gas-permeable tube being adjacent one of the major surfaces of each of said gas-impermeable webs to form a pair of adjacent tube and web surfaces;
d) treating at least one of the surfaces of each of said pair of adjacent tube and web surfaces to form at least one reactively-modified surface on each pair of adjacent surfaces;
e) applying sufficient pressure to said juxtaposed webs and tube that each of said gas-impermeable webs bond with one of said two major surfaces of said gas-permeable tube, thereby forming a laminated tube in which said gas-impermeable webs enwrap said gas-permeable tube and are peelably bonded to said tube at a bond-strength ranging from about 0.2 to about 15 Newtons/meter.

11. The method of claim 10, wherein said step of treating at least one of the surfaces of each of said pair of adjacent tube and web surfaces to form a reactively-modified surface comprises exposing said web surfaces to corona radiation.

12. The method of claim 11, wherein said corona radiation is applied to said surfaces at an energy level ranging from about 20 Joule/m² to about 500 Joule/m².

13. The method of claim 10, wherein both of the surfaces of each of said pair of adjacent tube and web surfaces are treated to form reactively-modified surfaces thereon.

14. The method of claim 10, further including the steps of:
severing a predetermined length of said laminated tube from the remainder of said laminated tube, whereby said severed laminated tube has two open ends; and
sealing closed one of said two open ends to form a pouch having one opening, an inner portion formed from said gas-permeable tube, and a peelable outer portion formed from said gas-impermeable webs.

15. The method of claim 14, further including the steps of:
inserting a product into the inner portion of said pouch;
at least partially evacuating said inner portion; and
sealing closed the opening of said pouch to thereby enclose the product within said inner portion.

16. The method of claim 15, wherein said gas-permeable tube is heat-shrinkable and said method further includes the step of heating said pouch to cause said inner portion to heat-contract about the contour of the product.

17. The method of claim 10, further including the steps of:
severing a predetermined length of said laminated tube from the remainder of said laminated tube, whereby said severed laminated tube has two open ends; and
sealing closed both of said two open ends and slitting open a portion of said severed laminated tube to form a pouch having one opening, an inner portion formed from said gas-permeable tube, and a peelable outer portion formed from said gas-impermeable webs.

18. The method of claim 17, further including the steps of:
inserting a product into the inner portion of said pouch;
at least partially evacuating said inner portion; and
sealing closed the opening of said pouch to thereby enclose the product within said inner portion.

19. The method of claim 18, wherein said gas-permeable tube is heat-shrinkable and said method further includes the step of heating said pouch to cause said inner portion to heat-contract about the contour of the product.

20. A method for making a peelable, laminated tube for packaging a product, comprising:
a) providing a web of a substantially gas-impermeable film having two longitudinal edges and two major surfaces;
b) treating at least one of the two major surfaces of said gas-impermeable web to form a reactively-modified surface thereon;
c) providing a web of a gas-permeable film in the form of a tube having an exterior surface;
d) wrapping said gas-impermeable web about the exterior surface of said gas-permeable tube such that
said reactively-modified surface of said web is in contact with the exterior surface of said tube, and
said longitudinal edges of said gas-impermeable web are in contact with one another; and
e) applying sufficient pressure to said gas-permeable tube, gas-impermeable web and longitudinal edges thereof that said reactively-modified surface of said gas-impermeable web bonds to the exterior surface of said gas-permeable tube and said longitudinal edges bond to one another to form a laminated tube in which said gas-impermeable web enwraps said gas-permeable tube and is peelably bonded to said tube at a bond-strength ranging from about 0.2 to about 15 Newtons/meter.

21. The method of claim 20, wherein said step of treating at least one of the two major surfaces of said gas-impermeable web to form a reactively-modified surface comprises exposing said web surface to corona radiation.

22. The method of claim 21, wherein said corona radiation is applied to said web surfaces at an energy level ranging from 20 Joule/m² to about 500 Joule/m².

23. The method of claim 20, further including the step of treating the exterior surface of said gas-permeable tube to form a reactively-modified surface thereon.

24. The method of claim 20, further including the steps of:
severing a predetermined length of said laminated tube from the remainder of said laminated tube, whereby said severed laminated tube has two open ends; and
sealing closed one of said two open ends to form a pouch having one opening, an inner portion formed from said gas-permeable tube, and a peelable outer portion formed from said gas-impermeable web.

25. The method of claim 24, further including the steps of:
inserting a product into the inner portion of said pouch;
at least partially evacuating said inner portion; and
sealing closed the opening of said pouch to thereby enclose the product within said inner portion.

26. The method of claim 25, wherein said gas-permeable tube is heat-shrinkable and said method further includes the step of heating said pouch to cause said inner portion to heat-contract about the contour of the product.

27. The method of claim 20, further including the steps of:
severing a predetermined length of said laminated tube from the remainder of said laminated tube, whereby said severed laminated tube has two open ends; and
sealing closed both of said two open ends and slitting open a portion of said severed laminated tube to form a pouch having one opening, an inner portion formed from said gas-permeable tube, and a peelable outer portion formed from said gas-impermeable webs.

28. The method of claim 27, further including the steps of:
inserting a product into the inner portion of said pouch;
at least partially evacuating said inner portion; and
sealing closed the opening of said pouch to thereby enclose the product within said inner portion.

29. The method of claim 28, wherein said gas-permeable tube is heat-shrinkable and said method further includes the step of heating said pouch to cause said inner portion to heat-contract about the contour of the product.

30. A gas-permeable, multilayer film, comprising:
a. two exterior layers comprising ethylene/alpha-olefin copolymer; and
b. at least one interior layer comprising ethylene/vinyl acetate copolymer, wherein the total weight percentage of ethylene/vinyl acetate copolymer in said multilayer film is no greater than 60 and said multilayer film is heat-shrinkable.

31. The multilayer film of claim 30, wherein said film has an oxygen transmission rate of at least 16,000 cc-mil/m²-atm.-24 hrs.

32. The multilayer film of claim 30, wherein said film is biaxially oriented.

33. The multilayer film of claim 30, wherein said film has a free shrink of at least 10 percent in at least one direction at a temperature of about 185°F.

34. The package of claim 1, wherein said gas-permeable enclosure comprises a multilayer film which comprises:
a. two exterior layers comprising ethylene/alpha-olefin copolymer; and
b. at least one interior layer comprising ethylene/vinyl acetate copolymer, wherein the total weight percentage of ethylene/vinyl acetate copolymer in said multilayer film is no greater than 60 and said multilayer film is heat-shrinkable.

35. The method of claim 10, wherein said gas-permeable enclosure comprises a multilayer film which comprises:
a. two exterior layers comprising ethylene/alpha-olefin copolymer; and
b. at least one interior layer comprising ethylene/vinyl acetate copolymer, wherein the total weight percentage of ethylene/vinyl acetate copolymer in said multilayer film is no greater than 60 and said multilayer film is heat-shrinkable.

36. The method of claim 20, wherein said gas-permeable enclosure comprises a multilayer film which comprises:
a. two exterior layers comprising ethylene/alpha-olefin copolymer; and
b. at least one interior layer comprising ethylene/vinyl acetate copolymer, wherein the total weight percentage of ethylene/vinyl acetate copolymer in said multilayer film is no greater than 60 and said multilayer film is heat-shrinkable.
